# EUROPÄISCHE PATENTSCHRIFT

(11) **EP 0 918 119 B1**
(45) Veröffentlichungstag und Bekanntmachung des Hinweises auf die Patenterteilung: **12.03.2003**
(21) Anmeldenummer: 98118909.5
(22) Anmeldetag: 07.10.1998
(51) Int. Cl.: E04F 13/08, F16B 13/08

(54) **Stein- und/oder Glas-Verbundelement mit Hinterschnittdübel**
Stone- and/or glass-composite element with anchor
Elément composite de pierre et/ou de verre avec cheville

(30) Priorität: 19.11.1997 DE 19751124
(43) Veröffentlichungstag der Anmeldung: 26.05.1999
(73) Patentinhaber: Wendker & Selders GmbH & Co. Naturstein-Glas-Verbund KG, 45701 Herten (DE)
(72) Erfinder: Selders, Johannes, 45659 Recklinghausen (DE)
(74) Vertreter: KOHLER SCHMID + PARTNER

(56) Entgegenhaltungen:
- EP-A- 0 367 908
- EP-A- 0 439 706
- EP-A- 0 799 949
- WO-A-94/19613
- DE-A- 3 110 101
- DE-A- 4 233 695

## Beschreibung

Die Erfindung betrifft einen Plattenverband zur Befestigung an äußeren oder inneren Gebäudeoberflächen, beispielsweise an Hausfassaden oder an Innenwänden, mit mindestens zwei mittels einer Verbundschicht, insbesondere einer vorzugsweise transparenten Gießharzschicht oder einer hochreißfesten Kunststoffklebefolie, fest miteinander verbundenen Platten aus Kunst- bzw. Naturstein und/oder Glas sowie mit einem Befestigungselement, das einerseits teilweise in den Plattenverband ragt, und in diesem verankert ist, andererseits einen vom Plattenverband wegragenden, vorzugsweise mit einem Außengewinde versehenen Bolzen zur Befestigung an einer Unterkonstruktion ggf. über ein Halterungselement aufweist.

Ein solcher Plattenverband ist beispielsweise aus der EP 0 799 949 A1 bekannt.

Naturstein-Glas-Verbundelemente werden immer häufiger beispielsweise für die Verkleidung von Bauwerksfassaden großflächig verwendet. Ein Problem bei der Verarbeitung derartiger Verbundelemente, insbesondere wenn sie aus mehr als zwei Platten zusammengesetzt sind, besteht in der Befestigung des Verbundelements an der entsprechenden Unterkonstruktion. Dabei muß einerseits eine sichere Halterung des Elements auch unter extremen Bedingungen, beispielsweise Gebäudebränden, zumindest aber einer größeren Temperaturwechselbeanspruchung, sowie relativ hoher Windsogkräfte garantiert sein, was bei den meist unterschiedlichen Wärmeausdehnungskoeffizienten der verwendeten Materialien problematisch sein kann, andererseits soll die Befestigung an der Gebäudeoberfläche möglichst einfach vonstatten gehen können.

In der eingangs zitierten EP 0 799 949 A1 sind unter anderem Haltekonstruktionen diskutiert, bei denen die Verbundelemente beidseits eingeschoben werden können. Weiterhin wird eine Lösungsmöglichkeit diskutiert, bei der in die bauwerksseitige Platte des Plattenverbands parallel zur Plattenoberfläche eine T-förmige durchgehende Ausnehmung eingefräst wird, in die dann ein sogenannter Pilzkopf von der Gebäudeseite her eingeführt wird. Eine weitere in der Druckschrift diskutierte Halterungslösung schließlich sieht eine Durchgangsbohrung durch eine oder mehrere Platten des Verbundelementes vor, die an ihrem dem Gebäude abgewandten Seite in eine konische Bohrung zur Aufnahme einer Senkkopfschraube übergeht, welche von der gebäudeabgewandten Seite her durch die Durchgangsbohrung gesteckt und in einem zwischen der Gebäudewand und dem Verbundelement positionierten Halterungselement mit Gewindebohrung angezogen beziehungsweise durch aufgeschraubte Muttern gegen eine Haltekonstruktion gekontert wird. Dabei ist nachteilig, daß die Senkkopfschraube an der gebäudeabgewandten Seite des Plattenverbands sichtbar ist, was zu einer erheblichen ästhetischen Beeinträchtigung des Gesamtbildes führt.

Um diesen Nachteil zu umgehen, wird in der EP 0 799 949 A1 eine weitere Halterungslösung vorgeschlagen, bei der lediglich in der gebäudenächsten Platte des Plattenverbandes eine konisch auslaufende Durchgangsbohrung vorgesehen ist, in die vor der eigentlichen Herstellung des Plattenverbandes eine Flanschmutter eingelegt wird, sodann mit Hilfe einer Gießharzschicht weitere, gebäudeabgewandte Platten aufgebracht werden und zur Befestigung des so entstehenden Verbundes an einer Unterkonstruktion von der Gebäudeseite her eine Gewindestange in die nunmehr unverlierbar in der konischen Bohrung festsitzende Flanschmutter eingeschraubt wird.

Aufgabe der vorliegenden Erfindung ist es demgegenüber, einen Plattenverband mit den eingangs beschriebenen Merkmalen vorzustellen, der ein wesentlich einfacher montierbares Befestigungselement aufweist, welches aber dennoch ausreichend hohe Gegenkräfte gegen ein Herausziehen aus dem Plattenverband aufbringt, um den Anforderungen im Hochbauwesen zu genügen.

Erfindungsgemäß wird diese Aufgabe dadurch gelöst, daß das Befestigungselement einen Hinterschnittdübel mit einem Spreizelement, einer Hülse und dem vom Plattenverband zur Gebäudeoberfläche wegragenden Bolzen umfaßt, wobei die Hülse vollständig die gebäudeseitige Platte des Plattenverbandes und teilweise mindestens eine gebäudeabgewandt daran anschließende Platte bis zum axialen Ende der Hülse formschlüssig durchdringt, wobei im Anschluß an dieses axiale Ende der Hülse in der teilweise von der Hülse durchdrungenen Platte ein hinterschnittenes Bohrloch vorgesehen ist, in welchem das Spreizelement kraftschlüssig verankert ist, und wobei die Verbundschichten zwischen sämtlichen von der Hülse vollständig oder teilweise durchdrungenen Platten in einem radialen Bereich um die Hülse herum jeweils durch eine ringförmige Zwischenlage ersetzt sind, deren axiale Dicke der Dicke der jeweiligen Verbundschicht entspricht.

Hinterschnittdübel, die einen für den erfindungsgemäßen Plattenverband geeigneten Aufbau aufweisen, sind beispielsweise aus der Firmendruckschrift "fischer-Zykon-Plattenanker FZP-K" der Firma fischerwerke ARTUR FISCHER GmbH & Co. KG, Waldachtal, Januar 1997 sowie aus der Zulassungsschrift für das entsprechende Produkt vom Deutschen Institut für Bautechnik, Berlin, Seiten 1 bis 21 vom 28.Juni 1995 bekannt. In den dort beschriebenen Anwendungsbeispielen sind derartige Plattenanker jedoch lediglich im Zusammenhang mit der Montage von einfachen Platten, nicht von mehrere Platten umfassenden Verbundelementen beschrieben.

Bei einer Anwendung derartiger Zykon-Plattenanker ohne Verwendung der erfindungsgemäß in die Verbundschichten eingesetzten Zwischenlagen sind die Auszugskräfte, mit denen der Hinterschnittdübel aus dem Plattenverband herausgezogen werden kann, für Anwendungen im Hochbau in der Regel zu gering. Durch das erfindungsgemäße Einfügen der zwischenlagen jedoch ergeben sich demgegenüber 5- bis 7-fach erhöhte Auszugskräfte, da beim Ausziehen des Befestigungselements aus dem Plattenverband die Kräfte zunächst auf die Zwischenlagen und erst dann auf die Platten selbst übertragen werden. Insbesondere bei Stein-Glas-Verbundelementen würde der Stein ohne Verwendung der erfindungsgemäße Zwischenlage bei Ansetzen von Auszugskräften herausbrechen und die Kräfte über die relativ weiche Verbundschicht auf eine folgende Glasschicht übertragen werden, welche zwar in der Regel weniger spröde sein wird, jedoch aufgrund der dynamischen Krafteinleitung dann splittern wird.

Besonders bevorzugt ist eine Ausführungsform des erfindungsgemäßen Plattenverbandes, bei der die Zwischenlage kreisringförmig und im Prinzip wie eine Beilagscheibe aufgebaut ist. Eine solche Zwischenlage läßt sich einerseits besonders einfach herstellen, andererseits ist auch die kreisförmige Ausnehmung an der entsprechenden Stelle in der Verbundschicht problemlos darstellbar. Wegen der Kreissymmetrie schließlich ist der Einbau der Zwischenlage besonders leicht, da auf keine bestimmte radiale Orientierung geachtet werden muß. Ein weiterer Vorteil besteht darin, daß die Kraftaufnahme in der kreisringförmigen Zwischenlage absolut symmetrisch verteilt ist, so daß es zu keinen besonderen lokalen Überbelastungen kommt.

Bei anderen Ausführungsformen kann die ringförmige Zwischenlage aber auch beispielsweise elliptische Form haben oder als Vieleck aufgebaut sein.

Bevorzugt ist auch eine Ausführungsform, bei der der Innendurchmesser der ringförmigen Zwischenlage mindestens dem Außendurchmesser der Hülse entspricht, wodurch die Hülse nach dem Durchstecken formschlüssig in der Zwischenlage gehalten wird.

Besonders bevorzugt ist auch eine Ausführungsform des erfindungsgemäßen Plattenverbandes, bei der der Außendurchmesser der ringförmigen Zwischenlage so bemessen ist, daß in einer die Längsachse der Hülse enthaltenden Ebene die Verbindungslinie zwischen dem radial äußersten Punkt des hinterschnittenen Bohrlochs und dem radial äußersten Punkt der Zwischenlage mit der Ebene der Zwischenlagenoberfläche einen Winkel von ungefähr 45° einschließt. Auf diese Weise ergibt sich eine besonders günstige Kraftverteilung hinsichtlich der Halte- bzw. Auszugskräfte über dem Hinterschnittdübel.

Bei Weiterbildungen dieser Ausführungsform, insbesondere unter Verwendung der obengenannten marktüblichen Zykon-Plattenanker beträgt der Außendurchmesser der ringförmigen Zwischenlage zwischen 30 mm und 50 mm.

Da der erfindungsgemäße Plattenverband vor allem im Bereich von Gebäude-Außenfassaden Verwendung finden wird, ist bei einer besonders bevorzugten Ausführungsform die Zwischenlage jeweils aus nichtkorrodierendem, insbesondere nichtrostendem Material aufgebaut.

Bei Weiterbildungen kann die Zwischenlage eine Metallscheibe, vorzugsweise eine Stahlscheibe umfassen, welche relativ preisgünstig herstellbar ist und hohe Zug- bzw. Druckkräfte aufnehmen kann.

Falls der Plattenverband eine Glasplatte umfaßt, ist es günstig, wenn die Metallscheibe zumindest einseitig an der Berührungsfläche mit der Glasplatte beschichtet ist.

Bei Weiterbildungen dieser Ausführungsformen weist die Metallscheibe eine Kunststoffbeschichtung auf, die beispielsweise durch Aufdampfen aufgebracht werden kann. Alternativ kann die Metallscheibe aber auch eine Passivierungsschicht, beispielsweise eine Metalloxidschicht aufweisen.

Die Zwischenlage kann aber bei anderen Ausführungsformen auch eine Kunststoffscheibe umfassen bzw. aus einer Kunststoffscheibe bestehen.

Bei Weiterbildungen dieser Ausführungsform ist die Kunststoffscheibe transparent, so daß bei auf der Gebäudeaußenseite liegenden Glasplatten die Durchsicht auf darunterliegende Steinplatten erhalten bleibt und der ästhetische Gesamteindruck einer solchen Fassade nicht gestört wird.

Schließlich kann die Zwischenlage auch eine Glasscheibe umfassen, was insbesondere bei transparenten Außenplatten die Ästhetik des montierten Plattenverbandes verbessert.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigen:
- Fig. 1: eine schematische, teilgeschnittene Ansicht einer Ausführungsform des Plattenverbands mit Befestigungselement und zwei Platten in einer die Längsachse der Hülse des Hinterschnittdübels enthaltenden Ebene;
- Fig. 2: eine Ausführungsform mit gebäudeseitiger Glasplatte und sichtseitiger Steinplatte im Plattenverband;
- Fig. 3: eine Ausführungsform mit gebäudeseitiger Steinplatte und sichtseitiger Glasplatte im Plattenverband;
- Fig. 4a: eine Ausführungsform der Zwischenlage in Draufsicht;
- Fig. 4b: die Zwischenlage nach Fig. 4a im Schnitt durch die Ebene A-A.

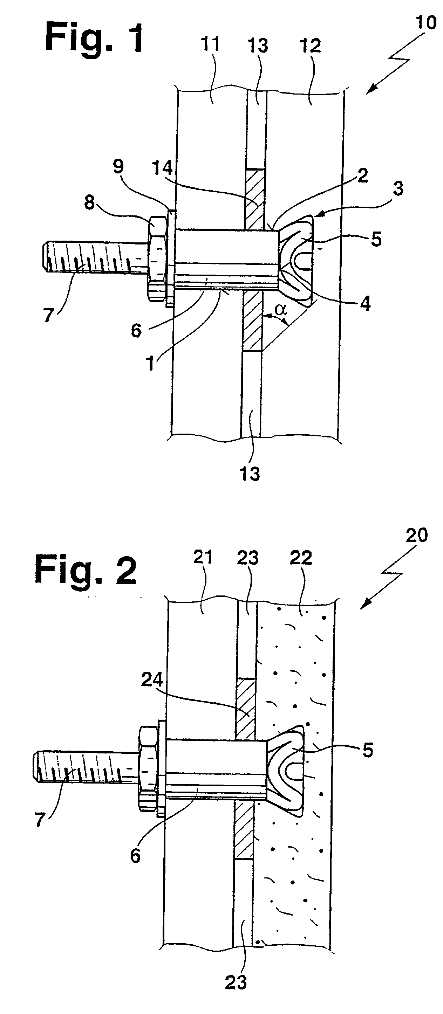

In Fig. 1 ist schematisch eine Ausführungsform des erfindungsgemäßen Plattenverbandes 10 dargestellt, der ein Verbundelement aus einer gebäudeseitigen Platte 11 und einer gebäudeabgewandten Platte 12 umfaßt. Die Sichtseite von der gebäudeabgewandten Seite her ist mit einem Pfeil gekennzeichnet. Die Platten 11, 12, bei denen es sich um Glasplatten und/oder Natur- bzw. Kunststeinplatten handeln kann, sind mittels einer Verbundschicht 13 fest miteinander verbunden. Die Verbundschicht 13 kann beispielsweise eine hochreißfeste Kunststoffklebefolie aus PVB, EVA oder sonstigem geeigneten Material sein. Sie kann aber auch aus einer einoder mehrkomponentigen Gießharzschicht, einem organischen oder einem anorganischen Kleber bestehen.

Die Glasplatten in einem erfindungsgemäßen Plattenverband können unter anderem aus Floatglas, vorgespanntem Glas (ESG, klar oder beschichtet), teilvorgespanntem Glas (TVG, klar oder beschichtet) oder mehrschichtigem Panzerglas bestehen.

In der gebäudeseitigen Platte 11 ist eine durchgängige Bohrung 1 vorgesehen, die in der sichtseitigen Platte 12 in eine Bohrung 2 mit kegelförmigem Hinterschnittabschluß 3 übergeht. In die Bohrungen 1, 2 ist eine Hülse 6 formschlüssig eingeführt, die Teil eines Hinterschnittdübels ist. Am gebäudeabgewandten axialen Ende 4 der Hülse 6 ragt ein ringförmiges Spreizelement 5 in den Hinterschnittabschluß 3 der Bohrung 2 und verankert damit kraftschlüssig den Hinterschnittdübel in der gebäudeabgewandten Platte 12. Innerhalb der Hülse 6 verläuft ein Konusbolzen 7 mit Außengewinde, der kraftschlüssig mit dem Spreizelement 5, welches teilweise auch innerhalb der Hülse 6 verläuft, verbunden ist.

Um ein Herausziehen des Hinterschnittdübels aus dem Plattenverband zu verhindern, ist zusätzlich eine Beilagscheibe 9 vorgesehen, welche mit einer Kontermutter 8 gegen die gebäudeseitige Platte 11 derart verschraubt ist, daß die Hülse 6 nicht mehr aus der Bohrung 1 in Richtung auf den Bolzen 7 herausgezogen werden kann.

Ein wesentliches Element der vorliegenden Erfindung ist nun die ringförmige Zwischenlage 14, die in einem radialen Bereich um die Hülse 6 herum die Verbundschicht 13 in diesem Bereich ersetzt. Ihre axiale Dicke t entspricht der Dicke der Verbundschicht 13. Durch das Einfügen dieser Zwischenlage 14 in den Plattenverband 10 werden die zum Herausziehen des Hinterschnittdübels 5, 6, 7 aus dem Plattenverband 10 erforderlichen Auszugskräfte um das 5- bis 7-fache erhöht. Durch die Zwischenlage 14 werden beim Auszug des Hinterschnittdübels aus dem Plattenverband 10 die im Bereich des Spreizelementes 5 auf die gebäudeabgewandte Platte 12 wirkenden Auszugskräfte zuerst großflächig auf die Zwischenlage 14 und dann erst auf die dahinterliegende gebäudeseitige Platte 11 übertragen, während sie ohne die Zwischenlage 14 über die relativ weiche Verbundschicht 13 in ungünstigerer Weise in einem kleineren Raumgebiet und damit unter Erzeugung eines höheren lokalen Druckes weitergegeben werden, was zu einer Zerstörung des Hinterschnittabschlusses 3 in der Platte 12, einem lokalen Zersplittern der Platte 11 und einem Herausreißen des Hinterschnittdübels führen kann.

Um die oben geschilderte Kräfteübertragung optimal zu gestalten, sollte der Außendurchmesser D der ringförmigen Zwischenlage 14 so bemessen sein, daß in einer die Längsachse der Hülse 6 enthaltenden Ebene die Verbindungslinie zwischen dem radial äußersten Punkt des Hinterschnittabschlusses 3 der Bohrung 2 und dem radial äußersten Punkt der Zwischenlage 14 einen Winkel α von ungefähr 45° mit der Ebene der Zwischenlagenoberfläche einschließt, wie in Fig. 1 angedeutet ist. Insbesondere kann bei Verwendung marktüblicher Zykon-Plattenanker als Hinterschnittdübel der Außendurchmesser D der ringförmigen Zwischenlage 14 zwischen 30 mm und 50 mm betragen. Der Innendurchmesser d der Zwischenlage 14, die günstigerweise kreisringförmig gestaltet ist, entspricht dem Außendurchmesser der Hülse 6.

In Fig. 2 ist ein weiteres Ausführungsbeispiel dargestellt, bei dem der erfindungsgemäße Plattenverband 20 aus einer gebäudeseitigen Glasplatte 21, einer sichtseitigen Natursteinplatte 22 und einer Verbundschicht 23 mit eingesetzter Zwischenlage 24 aufgebaut ist. Vorteilhafterweise ist bei dieser Ausführungsform von der Sichtseite her das Befestigungselement mit dem Hinterschnittdübel 5, 6, 7 nicht erkennbar, was den ästhetischen Eindruck bei Verwendung als Fassadenelement erheblich verbessern kann. Diejenigen Teile der Hülse 6, die mit der Glasplatte 21 in Berührung kommen, sollten aus Kunststoff bestehen oder mit Kunststoff beschichtet sein.

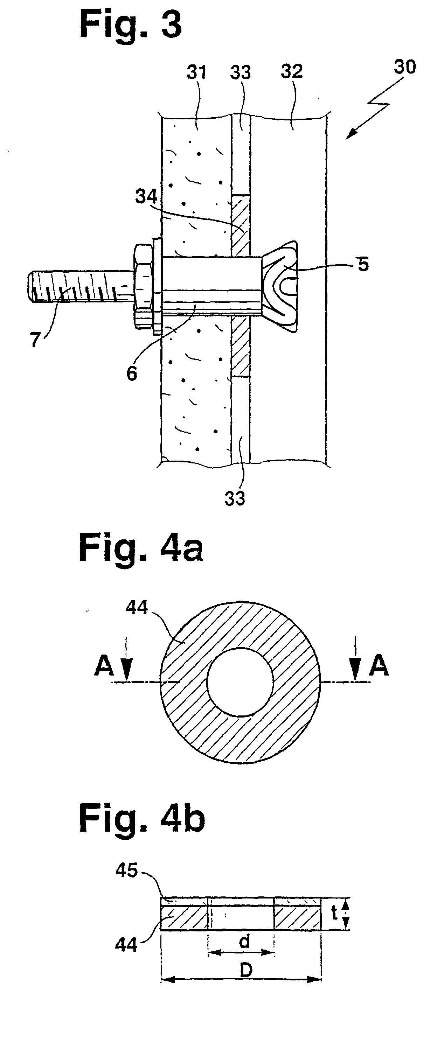

Fig. 3 zeigt ein Ausführungsbeispiel, bei dem der Plattenverband 30 gebäudeseitig eine relativ dünne Natursteinplatte 31 enthält, deren Dicke beispielsweise 10 mm betragen kann. Als Trägermaterial dient dann eine erheblich dickere Glasplatte 32 auf der gebäudeabgewandten Seite, die über eine Verbundschicht 33 und eine Zwischenlage 34 mit der Steinplatte 31 verbunden ist. Als Befestigungselement dient wiederum ein Hinterschnittdübel 5, 6, 7.

In der Zeichnung nicht dargestellt sind weitere Ausführungsformen des erfindungsgemäßen Plattenverbandes, bei denen sich an die erste und die zweite Platte 11, 12; 21, 22; 31, 32 noch weitere gebäudeabgewandte Platten anschließen können, die über entsprechende Verbundschichten aneinander hängen. Das Befestigungselement mit dem Hinterschnittdübel kann in diesem Fall entweder bis zur äußersten sichtseitigen Platte durchgeführt werden, in welches es allerdings dann nur teilweise hineinragt oder es kann, wie in den Figuren 1 bis 3 dargestellt, lediglich in die beiden dem Gebäude zunächstliegenden Platten eingreifen. Für den Fall, daß der Hinterschnittdübel durch mehr als zwei Platten verläuft, wird jedesmal im Bereich zwischen zwei Platten die Verbundschicht erfindungsgemäß durch eine entsprechende Zwischenlage in einem radialen Bereich um die Hülse 6 des Hinterschnittdübels herum ersetzt.

Fig. 4a schließlich zeigt eine Draufsicht auf eine kreisringförmige Ausführungsform der erfindungsgemäß verwendeten Zwischenlage 44. Im Schnitt durch die Ebene A-A ist in Fig. 4b der innere Aufbau der Zwischenlage 44 dargestellt, die in diesem Ausführungsbeispiel eine einseitige Beschichtung 45 aufweist. Die Beschichtung 45 kann beispielsweise eine Kunststoffbeschichtung oder eine Passivierungsschicht, z.B. eine Metalloxidschicht sein.

Bei anderen Ausführungsformen kann die Zwischenlage 44 auch beidseitig oder ringsum beschichtet sein. In der Regel wird man die Zwischenlage bei Anlage an eine Glasplatte mit einer Beschichtung versehen, während eine Beschichtung bei Berührungsflächen mit Steinplatten nicht unbedingt erforderlich ist.

Die Zwischenlage 44 wird günstigerweise aus nicht-korrodierendem, insbesondere nicht-rostendem Material aufgebaut sein, um eine Verwendung auch im Außenbereich, z.B. an Außenfassaden dauerhaft zu ermöglichen. Beispielsweise kann die Zwischenlage 44 eine Metallscheibe, vorzugsweise eine Stahlscheibe sein. Bei Verwendung der Zwischenlage zwischen Glasplatten kann aber auch eine getönte oder vollständig transparente Kunststoff- oder Glasscheibe als Zwischenlage verwendet werden.

Im Rahmen der folgenden Patentansprüche kann bei in der Zeichnung nicht dargestellten Ausführungsformen der Erfindung der Plattenverband auch statt an einer Gebäudeoberfläche an Innenausbau-Elementen befestigt werden, beispielsweise als Tischplatte oder als Sichtfläche eines Einbaumöbels oder eines Raumteilers.

## Patentansprüche

1. Plattenverband zur Befestigung an äußeren oder inneren Gebäudeoberflächen, beispielsweise an Hausfassaden oder an Innenwänden, oder an Innenausbau-Elementen wie z.B. Einbaumöbeln, Tischen etc., mit mindestens zwei mittels einer Verbundschicht (13; 23; 33), insbesondere einer vorzugsweise transparenten Gießharzschicht oder einer hochreißfesten Kunststoffklebefolie, fest miteinander verbundenen Platten (11, 12; 21, 22; 31, 32) aus Kunst- bzw. Naturstein und/oder Glas sowie mit einem Befestigungselement, das einerseits teilweise in den Plattenverband (10; 20; 30) ragt, und in diesem verankert ist, andererseits einen vom Plattenverband wegragenden, vorzugsweise mit einem Außengewinde versehenen Bolzen (7) zur Befestigung an einer Unterkonstruktion ggf. über ein Halterungselement aufweist,
**dadurch gekennzeichnet,**
**daß** das Befestigungselement einen Hinterschnittdübel mit einem Spreizelement (5), einer Hülse (6) und dem vom Plattenverband zur Gebäudeoberfläche wegragenden Bolzen (7) umfaßt, wobei die Hülse (6) vollständig die gebäudeseitige Platte (11; 21; 31) des Plattenverbandes (10; 20; 30) und teilweise mindestens eine gebäudeabgewandt daran anschließende Platte (12; 22; 32) bis zum axialen Ende (4) der Hülse (6) formschlüssig durchdringt, wobei im Anschluß an dieses axiale Ende (4) der Hülse (6) in der teilweise von der Hülse (6) durchdrungenen Platte (12; 22; 32) ein hinterschnittenes Bohrloch (2, 3) vorgesehen ist, in welchem das Spreizelement (5) kraftschlüssig verankert ist, und wobei die Verbundschichten (13; 23; 33) zwischen sämtlichen von der Hülse (6) vollständig oder teilweise durchdrungenen Platten (11, 12; 21, 22; 31, 32) in einem radialen Bereich um die Hülse (6) herum durch eine ringförmige Zwischenlage (14; 24; 34; 44) ersetzt sind, deren axiale Dicke (t) der Dicke der jeweiligen Verbundschicht (13; 23; 33) entspricht.

2. Plattenverband nach Anspruch 1, **dadurch gekennzeichnet, daß** die Zwischenlage (14; 24; 34; 44) kreisringförmig ist.

3. Plattenverband nach Anspruch 1 oder 2, **dadurch gekennzeichnet, daß** der Innendurchmesser (d) der ringförmigen Zwischenlage (14; 24; 34; 44) dem Außendurchmesser der Hülse (6) entspricht.

4. Plattenverband nach einem der vorhergehenden Ansprüche, **dadurch gekennzeichnet, daß** der Außendurchmesser (D) der ringförmigen Zwischenlage (14; 24; 34; 44) so bemessen ist, daß in einer die Längsachse der Hülse (6) enthaltenden Ebene die Verbindungslinie zwischen dem radial äußersten Punkt des hinterschnittenen Bohrlochs (2, 3) und dem radial äußersten Punkt der Zwischenlage (14; 24; 34) mit der Ebene der Zwischenlagenoberfläche einen Winkel (α) von ungefähr 45° einschließt.

5. Plattenverband nach Anspruch 4, **dadurch gekennzeichnet, daß** der Außendurchmesser (D) der ringförmigen Zwischenlage (14; 24; 34; 44) zwischen 30 mm und 50 mm beträgt.

6. Plattenverband nach einem der vorhergehenden Ansprüche, **dadurch gekennzeichnet, daß** die Zwischenlage (14; 24; 34; 44) aus nicht-korrodierendem, insbesondere aus nicht-rostendem Material aufgebaut ist.

7. Plattenverband nach Anspruch 6, **dadurch gekennzeichnet, daß** die Zwischenlage (14; 24; 34; 44) eine Metallscheibe, vorzugsweise eine Stahlscheibe umfaßt.

8. Plattenverband nach Anspruch 7, **dadurch gekennzeichnet, daß** die Metallscheibe zumindest einseitig, vorzugsweise an einer Berührungsfläche zu einer Glasplatte (11, 12; 21; 32), beschichtet ist.

9. Plattenverband nach Anspruch 8, **dadurch gekennzeichnet, daß** die Metallscheibe eine Kunststoffbeschichtung aufweist.

10. Plattenverband nach Anspruch 8, **dadurch gekennzeichnet, daß** die Metallscheibe eine Passivierungsschicht, z.B. eine Metalloxidschicht, aufweist.

11. Plattenverband nach Anspruch 6, **dadurch gekennzeichnet, daß** die Zwischenlage (14; 24; 34; 44) eine Kunststoffscheibe umfaßt.

12. Plattenverband nach Anspruch 11, **dadurch gekennzeichnet, daß** die Kunststoffscheibe transparent ist.

13. Plattenverband nach Anspruch 6, **dadurch gekennzeichnet, daß** die Zwischenlage (14; 24; 34; 44) eine Glasscheibe umfaßt.

## Claims

1. Slab system to be mounted to outer or inner building surfaces, e.g. to house facades or inner walls, or to interior construction elements such as e.g. built-in furniture, tables, etc. with at least two slabs (11, 12; 21, 22; 31, 32) of plastic material or natural stone and/or glass, which are rigidly connected to each other by means of a laminate layer (13; 23; 33), in particular, a preferably transparent cast resin layer or an adhesive plastic sheet having an excellent tensile strength, and a mounting element which partially projects into the slab system (10; 20; 30) and is anchored therein, and which comprises on the other hand a bolt (7) which projects away from the slab system, preferably provided with an external thread for mounting to a sub-construction, if necessary, via a holding element, **characterized in that**
the mounting element comprises an undercut dowel with an expansion element (5), a sleeve (6) and the bolt (7) which projects away from the slab system towards the building surface, wherein the sleeve (6) completely and positively penetrates the slab (11; 21; 31) of the slab system (10; 20; 30) facing the building and partially penetrates at least one slab (12; 22; 32) bordering thereto and facing away from the building, to the axial end (4) of the sleeve (6), wherein in connection to this axial end (4) of the sleeve (6) an undercut drilled hole (2, 3) is provided in the slab (12; 22; 32) partially penetrated by the sleeve (6), in which the extension element (5) is non-positively anchored and wherein the laminate layers (13; 23; 33) located between all slabs (11, 12; 21, 22; 31, 32) completely or partially penetrated by the sleeve (6) are replaced in a radial region around the sleeve (6) by an annular intermediate layer (14; 24; 34; 44) whose axial thickness (t) corresponds to the thickness of the respective laminate layer (13; 23; 33).

2. Slab system according to claim 1, **characterized in that** the intermediate layer (14; 24; 34; 44) is circularly ring-shaped.

3. Slab system according to claim 1 or 2, **characterized in that** the inner diameter (d) of the annular intermediate layer (14; 24; 34; 44) corresponds to the outer diameter of the sleeve (6).

4. Slab system according to any one of the preceding claims, **characterized in that** the outer diameter (D) of the annular intermediate layer (14; 24; 34; 44) is dimensioned such that in a plane containing the longitudinal axis of the sleeve (6), the connecting line between the radially outermost point of the undercut drilled hole (2, 3) and the radially outermost point of the intermediate layer (14; 24; 34) encloses an angle (α) of approximately 45° with the plane of the intermediate layer surface.

5. Slab system according to claim 4, **characterized in that** the outer diameter (D) of the annular intermediate layer (14; 24; 34; 44) is between 30mm and 50mm.

6. Slab system according to any one of the preceding claims, **characterized in that** the intermediate layer (14; 24; 34; 44) is formed of non-corrosive, in particular rustproof material.

7. Slab system according to claim 6, **characterized in that** the intermediate layer (14; 24; 34; 44) comprises a metal disc, preferably a steel disc.

8. Slab system according to claim 7, **characterized in that** the metal disc is coated at least on one side, preferably on a contacting surface with the glass plate (11, 12; 21; 32).

9. Slab system according to claim 8, **characterized in that** the metal disc has a coating of plastic material.

10. Slab system according to claim 8, **characterized in that** the metal disc has a passivating layer, e.g. a metal oxide layer.

11. Slab system according to claim 6, **characterized in that** the intermediate layer (14; 24; 34; 44) comprises a plastic disc.

12. Slab system according to claim 11, **characterized in that** the plastic disc is transparent.

13. Slab system according to claim 6, **characterized in that** the intermediate layer (14; 24; 34; 44) comprises a glass disc.

## Revendications

1. Composite en plaques destiné à être fixé sur des surfaces extérieures ou intérieures de bâtiment, par exemple sur des façades ou sur des parois intérieures de maisons, ou encore sur des éléments d'aménagement intérieur, comme par exemple des meubles intégrés, des tables, etc., comprenant au moins deux plaques (11, 12 ; 21, 22 ; 31, 32) reliées fermement l'une à l'autre au moyen d'une couche composite (13 ; 23 ; 33), en particulier d'une couche de résine coulée de préférence transparente, ou d'une feuille de collage en matière plastique hautement résistante à l'arrachement, en pierre reconstituée ou naturelle et/ou en verre, et comprenant un élément de fixation qui pénètre d'une part partiellement dans le composite en plaques (10 ; 20 ; 30) et qui est ancré dans celui-ci et qui comporte d'autre part un goujon (7) dépassant en éloignement du composite en plaques et de préférence pourvu d'un filetage, en vue de la fixation à une construction inférieure, ou sur un élément de maintien,
**caractérisé en ce que** le
l'élément de fixation comprend une cheville à contre-dépouille avec un élément d'écartement (5), une douille (6) et le goujon (7) dépassant en éloignement du composite en plaques en direction de la surface du bâtiment, la douille (6) traversant complètement la plaque (11 ; 21 ; 31) du composite en plaques (10 ; 20 ; 30) disposée du côté bâtiment et partiellement au moins une plaque (12 ; 22 ; 32) disposée du côté détourné du bâtiment et jouxtant cette dernière, jusqu'à l'extrémité axiale (4) de la douille (6) et en coopération de formes, dans laquelle, en raccordement à cette extrémité axiale (4) de la douille (6) et dans la plaque (12 ; 22 ; 32) traversée partiellement par la douille (6), est prévu un trou (2, 3) en contre-dépouille dans lequel l'élément d'écartement (5) est ancré en coopération de forces, et dans laquelle les couches composites (13 ; 23 ; 33) sont remplacées, entre la totalité des plaques (11, 12 ; 21, 22 ; 31, 32) qui sont totalement ou partiellement traversées par la douille (6) et dans une région radiale autour de la douille (6), par une couche intermédiaire de forme annulaire (14 ; 24 ; 34 ; 44) dont l'épaisseur axiale (t) correspond à l'épaisseur de la couche composite respective (13 ; 23 ; 33).

2. Composite en plaques selon la revendication 1, **caractérisé en ce que** la couche intermédiaire (14 ; 24 ; 34 ; 44) est en forme de bague circulaire.

3. Composite en plaques selon l'une ou l'autre des revendications 1 et 2, **caractérisé en ce que** le diamètre intérieur (d) de la couche intermédiaire de forme annulaire (14 ; 24 ; 34 ; 44) correspond au diamètre extérieur de la douille (6).

4. Composite en plaques selon l'une des revendications précédentes, **caractérisé en ce que** le diamètre extérieur (D) de la couche intermédiaire de forme annulaire (14 ; 24 ; 34 ; 44) est ainsi choisi que dans un plan qui contient l'axe longitudinal de la douille (6), la ligne de jonction entre le point radialement le plus extérieur du trou en contre-dépouille (2,3) et le point radialement le plus extérieur de la couche intermédiaire (14 ; 24 ; 34) forme avec le plan de la surface de la couche intermédiaire un angle (α) d'environ 45 degrés.

5. Composite en plaques selon la revendication 4, **caractérisé en ce que** le diamètre extérieur (D) de la couche intermédiaire de forme annulaire (14 ; 24 ; 34 ; 44) et compris entre 30 et 50 mm.

6. Composite en plaques selon l'une des revendications précédentes, **caractérisé en ce que** la couche intermédiaire (14 ; 24 ; 34 ; 44) est constituée en un matériau non sujet à la corrosion, en particulier en matériau non sujet à l'oxydation.

7. Composite en plaques selon la revendication 6, **caractérisé en ce que** la couche intermédiaire (14 ; 24 ; 34 ; 44) comprend un disque de métal, de préférence un disque en acier.

8. Composite en plaques selon la revendication 7, **caractérisé en ce que** le disque de métal est revêtu au moins sur un côté, et de préférence au niveau d'une surface de contact avec une plaque de verre (11 ; 12 ; 21 ; 32).

9. Composite en plaques selon la revendication 8, **caractérisé en ce que** le disque de métal comporte un revêtement en matière plastique.

10. Composite en plaques selon la revendication 8, **caractérisé en ce que** le disque de métal comporte une couche de passivation, par exemple une couche d'oxyde métallique.

11. Composite en plaques selon la revendication 6, **caractérisé en ce que** la couche intermédiaire (14 ; 24 ; 34 ; 44) comprend un disque en matière plastique.

12. Composite en plaques selon la revendication 11, **caractérisé en ce que** le disque en matière plastique est transparent.

13. Composite en plaques selon la revendication 6, **caractérisé en ce que** la couche intermédiaire (14 ; 24 ; 34 ; 44) comprend un disque en verre.
